Europäisches Patentamt

European Patent Office

Office européen des brevets

(19)

(11) Numéro de publication : **0 272 967 B1**

(12)

# FASCICULE DE BREVET EUROPEEN

(45) Date de publication du fascicule du brevet :
**27.02.91 Bulletin 91/09**

(51) Int. Cl.⁵ : **F16D 23/14**

(21) Numéro de dépôt : **87402733.7**

(22) Date de dépôt : **02.12.87**

(54) Butée de débrayage à rondelle élastique bistable, notamment pour véhicule automobile.

(30) Priorité : **05.12.86 FR 8617046**

(43) Date de publication de la demande :
**29.06.88 Bulletin 88/26**

(45) Mention de la délivrance du brevet :
**27.02.91 Bulletin 91/09**

(84) Etats contractants désignés :
**DE ES FR IT**

(56) Documents cités :
**FR-A- 2 544 429**
**GB-A- 2 058 276**

(73) Titulaire : **VALEO**
**64 Avenue de la Grande Armée**
**F-75017 Paris (FR)**

(72) Inventeur : **Gay, Christian**
**36 Rue Labat**
**F-75018 Paris (FR)**
Inventeur : **Lassiaz, Philippe**
**20 Rue Thiers**
**F-92100 Boulogne (FR)**

(74) Mandataire : **CABINET BONNET-THIRION**
**95 Boulevard Beaumarchais**
**F-75003 Paris (FR)**

EP 0 272 967 B1

Jouve, 18, rue Saint-Denis, 75001 PARIS

## Description

La présente invention concerne d'une manière générale les butées de débrayage du type de celles mises en oeuvre par exemple pour l'équipement de véhicules automobiles.

Ainsi qu'on le sait, une telle butée de débrayage comporte, globalement, d'une part, un élément de manoeuvre, qui est destiné à être soumis à l'action d'un organe de commande, en pratique une fourchette de débrayage, et, d'autre part, un élément d'attaque, qui, soit directement, soit indirectement, est en appui axial contre l'élément de manoeuvre, et qui, sous l'action de celui-ci, est destiné à agir sur le dispositif débrayeur d'un embrayage.

La présente invention vise plus particulièrement le cas où, pour l'appui axial de l'élément d'attaque sur l'élément de manoeuvre, il est mis en oeuvre une rondelle élastique à action axiale bistable, c'est-à-dire une rondelle élastique à action axiale qui, par retournement, est apte à prendre de manière stable l'une ou l'autre de deux configurations concave et convexe distinctes, l'une d'attente et l'autre de service, lesdites deux configurations concave et convexe étant prises en considération pour un même sens axial donné d'observation.

Une butée de débrayage de ce type est décrite par exemple dans la demande de brevet français qui, déposée le 15 Avril 1983 sous le No 83 06198, a été publiée sous le No 2.544.429.

Globalement, la rondelle élastique qui y est mise en oeuvre est destinée à porter, axialement, en configuration de service, par l'une de ses périphéries, sur l'élément d'attaque, et elle présente, le long de son autre périphérie, au moins une patte, par laquelle elle est adaptée à prendre appui sur l'élément de manoeuvre.

Dans certaines au moins des formes de réalisation envisagées, cette patte fait globalement un dièdre avec la rondelle élastique à laquelle elle appartient.

Par exemple, sensiblement rectiligne, elle est destinée à s'arc-bouter, par la tranche de son extrémité, sur un épaulement de l'élément de manoeuvre, et la concavité du dièdre qu'elle fait avec la rondelle élastique est alors axialement tournée du côté de cette rondelle élastique opposé à celui par lequel celle-ci, en configuration de service, porte axialement sur l'élément d'attaque.

En variante, munie à cet effet à son extrémité d'un retour en équerre, elle est destinée à se crocheter sur l'élément de manoeuvre, et la concavité du dièdre qu'elle fait avec la rondelle élastique est alors axialement tournée du même côté de cette rondelle élastique que celui par lequel, en configuration de service, cette rondelle élastique porte axialement sur l'élément d'attaque.

Quoi qu'il en soit, la mise en oeuvre, ainsi faite, d'une rondelle élastique à action axiale bistable présente notamment l'avantage de faciliter l'assemblage de l'ensemble : la rondelle élastique à action axiale étant en configuration d'attente au sein de l'élément d'attaque, auquel, dès l'origine, elle appartient, il est simplement procédé à un engagement axial relatif entre cet élément d'attaque et l'élément de manoeuvre, et, au terme de cet engagement axial, cette rondelle élastique passe d'elle-même en configuration de service, avec arc-boutement ou crochetage de sa ou de ses pattes sur l'élément de manoeuvre.

La disposition correspondante a donc donné et peut encore donner satisfaction.

Elle présente cependant l'inconvénient de conduire à une sollicitation mécanique non négligeable de la zone d'enracinement par laquelle la ou les pattes de la rondelle Belleville se raccordent à celle-ci.

En effet, lors de l'assemblage de l'ensemble, l'angle du dièdre que font ces pattes avec cette rondelle élastique change plusieurs fois de valeur.

Par exemple, s'agissant de pattes rectilignes destinées à intervenir par arc-boutement, cet angle, qui, initialement, en configuration d'attente, est largement supérieur à 90°, en étant en pratique proche de 180°, est d'abord ramené à une valeur inférieure à 90° dans la première phase d'engagement relatif entre l'élément d'attaque et l'élément de manoeuvre, et il revient ensuite à une valeur supérieure à 90°, lorsque, au terme de cet assemblage, la rondelle élastique bascule en configuration de service.

Les sollicitations mécaniques correspondantes peuvent intempestivement entraîner une rupture.

La présente invention a d'une manière générale pour objet une disposition permettant d'éviter cet inconvénient tout en permettant conjointement, si désiré, de conserver l'avantage d'un assemblage de l'ensemble par simple engagement axial relatif de l'élément d'attaque et de l'élément de manoeuvre.

De manière plus précise, elle a pour objet une butée de débrayage, notamment pour véhicule automobile, du genre comportant, globalement, d'une part, un élément de manoeuvre, qui est destiné à être soumis à l'action d'un organe de commande, par exemple une fourchette de débrayage, et, d'autre part, un élément d'attaque qui, soit directement, soit indirectement, est en appui axial contre l'élément de manoeuvre, et qui, sous l'action de celui-ci, est destiné à agir sur le dispositif débrayeur d'un embrayage, avec, pour l'appui axial dudit élément d'attaque sur ledit élément de manoeuvre aussi bien que pour son maintien axial vis-à-vis de celui-ci, une rondelle élastique à action axiale, du type rondelle Belleville, qui, par retournement, est apte à prendre de manière stable l'une ou l'autre de deux configurations concave et convexe distinctes, l'une d'attente, l'autre de service, et qui, destinée à porter, axialement, en configuration de service, par l'une de ses périphéries, sur l'élément d'attaque, présente, le long de son autre périphérie, au moins une patte, par laquelle elle est apte à prendre appui sur l'élément de manoeuvre, et qui, prise dans son ensemble, fait globalement un dièdre avec elle, l'élément de manoeuvre présentant circonférentiellement, pour coopération avec la ou les pattes que présente la rondelle élastique, une gorge, dont l'un des flancs est adapté à former une butée pour la ou lesdites pattes pour la configuration de service de la rondelle élastique, cette butée de débrayage étant d'une manière générale caractérisée en ce que l'autre des flancs de ladite gorge est adapté à fournir une butée à la ou lesdites pattes pour la configuration d'attente de la rondelle élastique, en sorte que l'angle du dièdre que forment la ou lesdites pattes avec ladite rondelle élastique peut avantageusement rester sensiblement le même pour l'une et l'autre desdites configurations.

Autrement dit, lors du basculement de la rondelle élastique de sa configuration d'attente à sa configuration de service, il se produit un simple changement d'orientation de la rondelle élastique, qui, tel qu'indiqué ci-dessus, de concave, par exemple, devient convexe, ou inversement, mais il ne se produit aucun changement sensible de forme pour l'ensemble que cette rondelle élastique constitue avec la ou les pattes dont elle est équipée.

La zone d'enracinement de ces pattes ne se trouvant de ce fait plus sollicitée, elle se trouve avantageusement ménagée.

Les caractéristiques et avantages de l'invention ressortiront d'ailleurs de la description qui va suivre, à titre d'exemple, en référence aux dessins schématiques annexés sur lesquels :

la figure 1 est une vue partielle en coupe axiale d'une butée de débrayage suivant l'invention ;

la figure 2 est une vue en perspective, en configuration de service, de la rondelle élastique à action axiale que comporte suivant l'invention cette butée de débrayage ;

la figure 3 est une vue en perspective analogue à celle de la figure 2, pour la configuration d'attente de cette rondelle élastique à action axiale ;

les figures 4A, 4B sont des vues partielles en coupe axiale qui, analogues à celle de la figure 1, illustrent deux phases successives de l'assemblage de la butée de débrayage suivant l'invention ;

la figure 5 est une vue partielle en coupe axiale analogue à celle de la figure 1, pour une variante de réalisation ;

la figure 6 est une vue analogue à celle de la figure 4A pour cette variante de réalisation ;

les figures 7 et 8 sont des vues partielles en coupe axiale, qui, analogues à celle de la figure 1, se rapportent, chacune respectivement, à deux autres variantes de réalisation ;

la figure 9 est une vue partielle en coupe axiale illustrant le mode de montage de la variante de réalisation représentée à la figure 8 ;

la figure 10 est une vue partielle en coupe axiale analogue à celle de la figure 8, pour une autre variante de réalisation.

Tel qu'illustré sur ces figures, une butée de débrayage suivant l'invention comporte, globalement, un élément de manoeuvre 10, qui est destiné à être soumis à l'action d'un organe de commande, par exemple une fourchette de débrayage, non représenté, et qui n'est que partiellement visible sur les figures, et un élément d'attaque 11, qui, soit directement, soit indirectement, est en appui axial contre l'élément de manoeuvre 10, et qui, sous l'action de celui-ci, est destiné à agir sur le dispositif débrayeur d'un embrayage, également non représenté, constitué par exemple par les extrémités des doigts d'un diaphragme.

De manière connue en soi, l'élément de manoeuvre 10 comporte, axialement, pour son engagement sur un quelconque organe de support et de guidage, non représenté, un manchon 12, et, transversalement, pour l'appui axial de l'élément d'attaque 11, un flasque 13, qui, en pratique, s'étend annulairement autour du manchon 12, en saillie sur la surface extérieure de celui-ci.

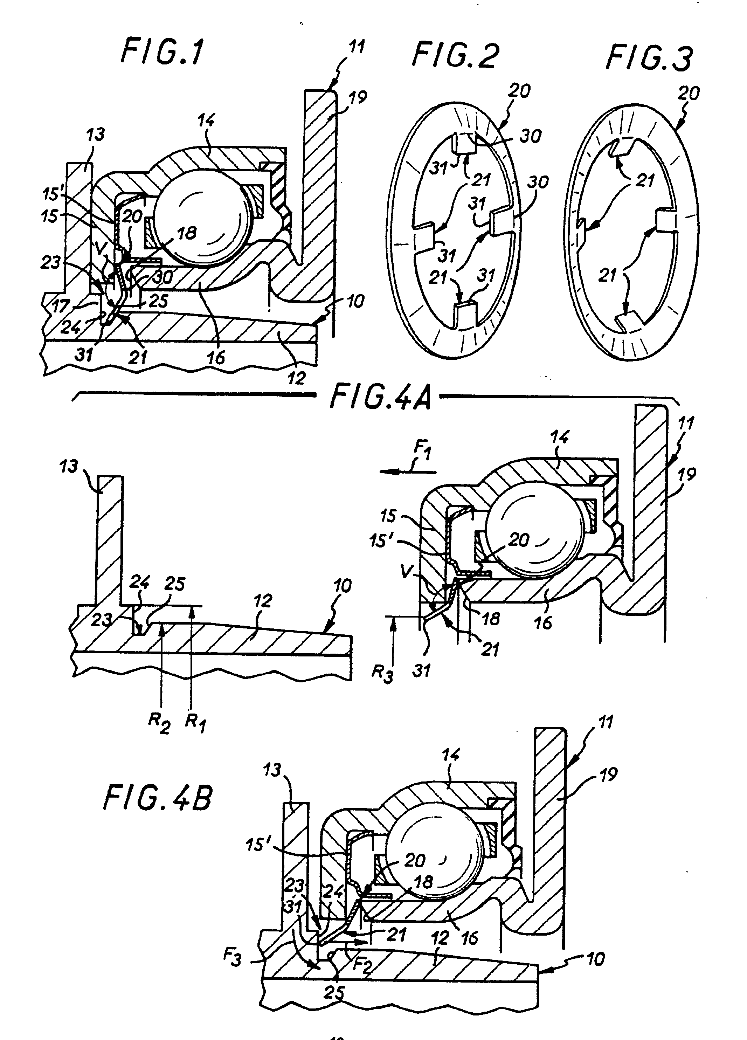

Dans la forme de réalisation représentée sur les figures 1 à 4, et pour des raisons qui apparaîtront ci-après, la surface extérieure du manchon 12 est globalement tronconique sur une partie au moins de sa longueur à compter de son extrémité opposée du flasque 13, en allant en divergeant en direction de ce dernier.

Quoi qu'il en soit, l'élément de manoeuvre 10 peut avantageusement être réalisé en matière synthétique, par moulage de celle-ci.

De manière également connue en soi, l'élément d'attaque 11 est constitué par un roulement à billes, dont une des bagues est adaptée à venir en appui axial contre l'élément de manoeuvre 10, tandis que l'autre est adaptée à agir sur le dispositif débrayeur de l'embrayage à commander.

Dans les formes de réalisation représentées sur les figures 1 à 6, c'est la bague extérieure 14 de ce roulement à billes qui est adaptée à venir en appui contre l'élément de manoeuvre 10, et, plus précisément, contre le flasque 13 de celui-ci, cette bague extérieure 14 comportant elle-même à cet effet, transversalement, pour appui sur ce flasque 13, un bord tombé 15 dirigé radialement vers l'axe de l'ensemble.

Conjointement, dans ces formes de réalisation, c'est la bague intérieure 16 du roulement à billes constituant l'élément d'attaque 11 qui est adaptée à agir sur le dispositif débrayeur de l'embrayage.

Dans la forme de réalisation représentée, elle comporte elle-même, transversalement, à cet effet, à son extrémité libre, un bord tombé 19 dirigé radialement en direction opposée à l'axe de l'ensemble.

En variante, cette extrémité libre peut aussi bien avoir un profil arrondi et/ou être dirigée radialement vers l'axe de l'ensemble.

Quoi qu'il en soit, dans les formes de réalisation représentées, l'appui axial entre l'élément d'attaque 11 et l'élément de manoeuvre 10 se fait directement, par contact direct entre le bord tombé 15 de la bague extérieure 14 du roulement à billes constituant cet élément d'attaque 11 et le flasque transversal 13 de cet élément de manoeuvre 10.

S'agissant, en pratique, d'une butée de débrayage autocentreuse, un jeu annulaire est laissé libre entre la tranche du bord tombé 15 de l'élément d'attaque 11 et une nervure 17, qui, à la périphérie interne du flasque 13 de l'élément de manoeuvre 10, au raccordement de ce flasque 13 avec le manchon 12 dont il est issu, fait radialement saillie à la surface externe de ce manchon 12.

Ces dispositions sont bien connues par elles-mêmes, et ne faisant pas en soi l'objet de la présente invention, elles ne seront pas décrites plus en détail ici.

Dans la forme de réalisation représentée sur les figures 1 à 4, et pour des raisons qui apparaîtront ci-après, la tranche de la bague intérieure 16 du roulement à billes constituant l'élément d'attaque 11 tournée vers le bord tombé 15 de sa bague extérieure 14 est au moins en partie biseautée par un chanfrein 18 du côté de l'axe de l'ensemble.

De manière également connue en soi, il est prévu, pour l'appui axial de l'élément d'attaque 11 sur l'élément de manoeuvre 10, et, plus précisément, s'agissant d'une butée de débrayage autocentreuse à autocentrage maintenu, pour le contrôle élastique de cet appui axial, une rondelle élastique à action axiale 20, du type rondelle Belleville.

Suivant des dispositions du type de celles décrites dans la demande de brevet FR-A-2544429 mentionnée ci-dessus, cette rondelle élastique 20 est une rondelle élastique bistable, c'est-à-dire une rondelle élastique qui, par retournement, est apte à prendre de manière stable l'une ou l'autre de deux configurations concave et convexe distinctes, l'une d'attente, l'autre de service, et, destinée à porter, axialement, en configuration de service, par l'une quelconque de ses périphéries, sur l'élément d'attaque 11, elle présente, d'un seul tenant avec elle, le long de son autre périphérie, au moins une patte 21, par laquelle elle est adaptée à prendre appui sur l'élément de manoeuvre 10.

Bien entendu, les configurations concave et convexe de cette rondelle élastique 20 doivent être appréciées suivant un même sens axial d'observation.

Ce sens axial d'observation étant par exemple celui qui va du bord tombé 15 de l'élément d'attaque 11 au flasque 13 de l'élément de manoeuvre 10, la rondelle élastique 20 est concave dans sa configuration d'attente, figure 3, et convexe dans sa configuration de service, figure 2.

Cette rondelle élastique 20 étant globalement tronconique, tout se passe comme si, par rapport à un plan transversal de l'ensemble passant par sa périphérie interne, elle basculait d'un côté à l'autre de ce plan transversal de l'une à l'autre de ses deux configurations concave et convexe stables.

Dans la forme de réalisation plus particulièrement représentée sur les figures 1 à 4, la rondelle élastique 20 est destinée à porter par sa périphérie externe, c'est-à-dire par sa périphérie de plus grand diamètre, sur le bord tombé 15 de l'élément d'attaque 11 lorsqu'elle est en configuration de service, et c'est donc le long de sa périphérie interne, c'est-à-dire le long de sa périphérie de plus petit diamètre, que, pour prendre appui sur l'élément de manoeuvre 10, elle présente une ou plusieurs pattes 21.

En pratique, quatre pattes 21, régulièrement réparties circulairement, à 90° deux à deux, sont ainsi prévues le long de la périphérie interne de la rondelle élastique 20.

En pratique, également, de leur zone d'enracinement 30 à leur extrémité 31, ces pattes 21 sont rectilignes.

Prise dans son ensemble, chacune de ces pattes 21 fait un dièdre, d'angle V, le même pour toutes, avec la rondelle élastique 20.

Suivant l'invention, pour coopération avec les pattes 21 que présente ainsi la rondelle élastique 20, l'élément de manoeuvre 10 présente circonférentiellement une gorge 23, dont l'un des flancs est adapté, tel qu'explicité ultérieurement, à former une butée pour ces pattes 21 pour la configuration d'attente de la rondelle élastique 20, cependant que l'autre est adapté à fournir une butée à ces pattes 21 pour la configuration de service de la rondelle élastique 20.

En pratique, le flanc de la gorge 23 destiné à former une butée pour les pattes 21 de la rondelle élastique 20 pour la configuration d'attente de celle-ci en est le flanc 24 axialement tourné vers l'élément d'attaque 11, c'est-à-dire le flanc qui, par rapport au flasque 13 de l'élément de manoeuvre 10, est tourné axialement dans le sens suivant lequel s'étend cet élément d'attaque 11, et le flanc destiné à fournir une butée à ces pattes 21 pour la configuration de service de la rondelle élastique 20 est le flanc 25 axialement tourné en sens opposé au précédent, et donc en sens opposé à l'élément d'attaque 11.

Mais la butée que ce flanc 25 de la gorge 23 fournit ainsi aux pattes 21 de la rondelle élastique 20 pour sa configuration de service est une butée d'appui, ces pattes 21 portant en effet alors à plat sur ce flanc 25.

Dans les formes de réalisation représentées sur les figures 1 à 7, la gorge 23 que présente l'élément de manoeuvre 10 s'étend à proximité du flasque 13 de celui-ci.

Dans la forme de réalisation plus particulièrement représentée sur les figures 1 à 4, cette gorge 23 affecte la surface externe du manchon 12 de l'élément de manoeuvre 10, et elle s'étend annulairement de manière circulairement continue tout autour de l'axe de celui-ci.

En pratique, cette gorge 23 s'étend sensiblement au droit, radialement, du bord tombé 15 de l'élément d'attaque 11.

Son flanc 24, qui est celui axialement tourné vers l'élément d'attaque 11, est droit, et il est axialement décalé vers cet élément d'attaque 11 par rapport au flasque 13 de l'élément de manoeuvre 10.

En pratique, ce flanc 24 délimite la nervure 17 présente à la racine de ce flasque 13.

Soit R1 le rayon de la circonférence suivant laquelle s'étend son bord d'extrémité.

Dans la forme de réalisation plus particulièrement représentée sur les figures 1 à 4, l'autre des flancs de la gorge 23 de l'élément de manoeuvre 10, celui, 25, destiné à fournir un appui aux pattes 21 de la rondelle élastique 20 pour la configuration de service de celle-ci, est incliné sur l'axe de l'ensemble, ce flanc 25 s'éloignant du flasque 13 dudit élément de manoeuvre 10 au fur et à mesure qu'il s'écarte dudit axe.

Soit R2 le rayon de la ciconférence suivant laquelle s'étend son bord d'extrémité.

Dans la forme de réalisation plus particulièrement représentée sur les figures 1 à 4, ce rayon R2 est inférieur au rayon R1 précédent, et, pour la configuration d'attente de la rondelle élastique 20, figure 4A, l'extrémité libre 31, ou extrémité d'attaque, des pattes 21 de celle-ci, s'étend sur une circonférence dont le rayon R3 est compris entre ces rayons R1 et R2.

Autrement dit, dans cette forme de réalisation, celui, 24, des flancs de la gorge 23 de l'élément de manoeuvre 10 qui est tourné axialement vers l'élément d'attaque 11 s'étend radialement au-delà de l'extrémité 31 des pattes 21 de la rondelle élastique 20 lorsque celle-ci est en configuration d'attente, cependant que l'autre, 25, de ces flancs ne s'étend radialement qu'en-deçà de cette extrémité.

En pratique, le rayon R3 de la circonférence sur laquelle s'étend l'extrémité libre 31 des pattes 21 de la rondelle élastique peut être sensiblement égal au rayon R2 de la circonférence suivant laquelle s'étend le bord d'extrémité du flanc 25 de la gorge 23 de l'élément de manoeuvre 10.

Dans la forme de mise en oeuvre illustrée, la rondelle élastique 20 équipe dès l'origine, figure 4A, l'élément d'attaque 11, cette rondelle élastique 20 étant alors axialement disposée entre le bord tombé 15 de la bague extérieure 14 du roulement à billes constituant cet élément d'attaque 11 et la tranche correspondante de la bague intérieure 16 de ce roulement à billes ; ainsi qu'il est aisé de le comprendre, le chanfrein 18 de cette tranche libère avantageusement un volume supérieur à cet endroit pour la rondelle élastique 20.

La rondelle élastique 20 est alors en configuration concave d'attente, et, par exemple, et tel que représenté, elle porte sur la bague intérieure 16 du roulement à billes constituant l'élément d'attaque 11.

Pour cette configuration d'attente, les pattes 21 de la rondelle élastique 20 s'étendent en direction de l'élément de manoeuvre 10, et, suivant ses dimensions, la rondelle élastique 20 se trouve alors centrée soit par appui de ses pattes 21 sur le bord tombé 15 du roulement à billes constituant l'élément d'attaque 11, soit par contact par sa périphérie externe, avec le déflecteur 15′ équipant usuellement intérieurement un tel roulement à billes.

Lorsqu'il est procédé à un engagement axial relatif de l'élément d'attaque 11 et de l'élément de manoeuvre 10, favorisé par la conicité que présente la surface extérieure du manchon 12 de ce dernier, et, par exemple, tel que schématisé par la flèche F1 sur la figure 4A, à un engagement axial de l'élément d'attaque 11 sur l'élément de manoeuvre 10, c'est par l'extrémité libre 31 des pattes 21 de la rondelle élastique 20 que, en raison des dispositions géométriques précisées précédemment, l'élément d'attaque 11 prend axialement contact avec l'élément de manoeuvre 10, lesdites pattes 21 venant buter par leur dite extrémité libre 31 contre le flanc 24 de la gorge 23 de l'élément de manoeuvre 10 axialement tourné vers l'élément d'attaque 11, avant que le bord tombé 15 de cet élément d'attaque 11 n'arrive au contact avec le flasque 13 de cet élément de manoeuvre 10, figure 4B.

Ainsi, l'engagement axial de l'élément d'attaque 11 sur l'élément de manoeuvre 10 étant poursuivi, la force de réaction, dont, suivant la flèche F2 de la figure 4B, sont alors l'objet les pattes 21 de la rondelle élastique 20, celle-ci se trouvant en appui par sa périphérie externe contre la tranche de la bague intérieure 16 de l'élément d'attaque cependant que ses pattes sont en appui contre le flanc 24 de la gorge 23 de l'élément de manoeuvre 10, se transmet, par ces pattes 21, à la périphérie interne de cette rondelle élastique 20, et, au-delà d'une certaine force correspondant à une certaine course, il en résulte le basculement brusque de cette rondelle élastique 20 de sa configuration concave d'attente à sa configuration convexe de service, figure 1.

Mais, conjointement, il en résulte, suivant la flèche F3 de la figure 4B, un basculement des pattes 21 de la rondelle élastique 20 en direction de l'axe de l'ensemble, en sorte que la rondelle élastique 20 vient prendre appui par ces pattes 21 contre le flanc 25 de la gorge 23 de l'élément de manoeuvre 10 cependant que, par sa périphérie externe, elle vient porter, axialement, sur le bord tombé 15 de l'élément d'attaque 11 et presser ainsi élastiquement celui-ci contre le flasque 13 de l'élément de manoeuvre 10.

En pratique, de la configuration d'attente de la rondelle élastique 20 à la configuration de service de celle-ci, l'ensemble que forme avec ses pattes 21 cette rondelle élastique 20 garde sensiblement la même forme, grâce à la présence d'une gorge 23 sur l'élément de manoeuvre 10 et à la configuration propre de cette gorge 23, et grâce également au fait que, l'extrémité libre 31 de ces pattes 21 se trouvant alors axialement entre les flancs 24 et 25 de cette gorge 23 et radialement en-deçà du bord d'extrémité de celui, 24, de ces flancs qui est radialement le plus étendu, ces pattes 21 se trouvant déjà en quelque sorte préengagées dans cette gorge 23.

Ainsi, grâce à la gorge 23 que présente suivant l'invention l'élément de manoeuvre 10, l'angle V du dièdre que forment avec la rondelle élastique 20 les pattes 21 de celle-ci peut avantageusement rester sensiblement le même en permanence, et, en particulier, il peut avantageusement rester sensiblement le même pour l'une et l'autre des configurations d'attente et de service de cette rondelle élastique 20.

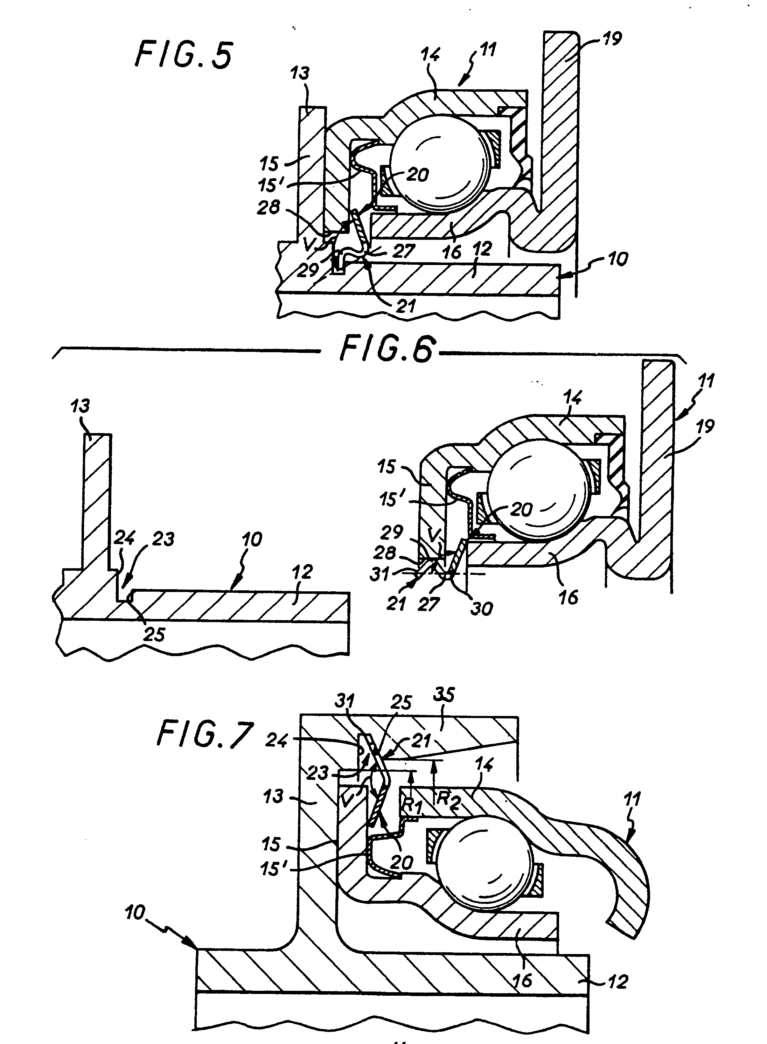

Suivant la variante de réalisation représentée sur les figures 5 et 6, chacune des pattes 21 de la rondelle élastique 20 présente au moins un coude 29, et, pour la configuration d'attente de la rondelle élastique 20, elle porte, par ce coude 29, sur une portée cylindrique 28 de l'élément d'attaque 11.

En pratique, cette portée cylindrique 28 est formée par la tranche du bord tombé 15 de cet élément d'attaque 11.

Dans la forme de réalisation représentée, chacune des pattes 21 a, globalement, une configuration en S, en présentant, successivement, à compter de la rondelle élastique 20, deux coudes 27, 29 de concavités opposées l'un par rapport à l'autre, et c'est par le deuxième, 29, de ces coudes, celui le plus éloigné de la rondelle élastique 20, que, en configuration d'attente, une telle patte 21 est apte à porter sur la portée cylindrique 28 de l'élément d'attaque 11.

Conjointement, dans cette forme de réalisation, le flanc 25 de la gorge 23 de l'élément de manoeuvre 10 destiné à fournir un appui aux pattes 21 de la rondelle élastique 20 est droit, sensiblement perpendiculairement à l'axe de l'ensemble.

Ainsi, dans cette forme de réalisation, l'un et l'autre des flancs 24, 25 de cette gorge 23 sont droits.

Globalement, c'est-à-dire prises dans leur ensemble, abstraction faite de leurs coudes, les pattes 21 de la rondelle élastique 20 font encore, comme précédemment, un dièdre d'angle V avec la rondelle élastique 20, ce dièdre étant par exemple apprécié par rapport à la ligne qui reĺie leur zone d'enracinement 30 à leur extrémité libre 31.

Comme précédemment, également, lorsque la rondelle élastique 20 est en configuration d'attente, figure 6, ses pattes 21 s'étendent en direction de l'élément de manoeuvre 10, chacune desdites pattes 21, prise dans son ensemble, s'étendant alors en pratique globalement axialement.

Pour cette configuration d'attente, la rondelle élastique 20 se trouve centrée par ses pattes 21, celles-ci portant, alors, par leur coude 29, comme indiqué ci-dessus, contre la portée cylindrique 28 de l'élément d'attaque 11.

L'assemblage de l'élément d'attaque 11 avec l'élément de manoeuvre 10 se fait comme précédemment, et, au terme de cet assemblage, après basculement de la rondelle élastique 20, les pattes 21 de celle-ci prennent appui sur le flanc 25 de la gorge 23 de l'élément de manoeuvre 10, sans qu'il y ait une modification sensible de l'angle V du dièdre qu'elles forment avec la rondelle élastique 20.

Dans la variante de réalisation illustrée à la figure 7, c'est par sa bague extérieure 14 que le roulement à billes constituant l'élément d'attaque 11 est adapté à agir sur le dispositif débrayeur d'un embrayage, et c'est donc sa bague intérieure 16 qu'il présente, radialement, mais en direction opposée à l'axe de l'ensemble, un bord tombé 15, pour appui sur le flasque 13 de l'élément de manoeuvre 10.

La gorge 23 que présente l'élément de manoeuvre 10 pour l'appui des pattes 21 de la rondelle élastique 20 affecte alors la surface interne d'une couronne 35 que le flasque 13 de l'élément de manoeuvre 10 présente axialement en saillie à sa périphérie externe, parallèlement au manchon 12 de cet élément de manoeuvre 10, dans le même sens que celui-ci.

Conjointement, c'est par sa périphérie interne que la rondelle élastique 20 est destinée à porter sur l'élément d'attaque 11, et, plus précisément, sur le bord tombé 15 de celui-ci, et c'est donc à sa périphérie externe qu'elle présente au moins une patte 21, et, en pratique, au moins deux pattes 21 convenablement réparties circulairement.

Par exemple, comme précédemment, quatre pattes 21 sont ainsi prévues à la périphérie externe de la rondelle élastique 20.

Pour la configuration d'attente de la rondelle élastique 20, non représentée, le flanc 24 de la gorge 23 de l'élément de manoeuvre 10 qui est tourné axialement vers l'élément d'attaque 11 s'étend radialement en-deçà de l'extrémité libre 31 des pattes 21 de la rondelle élastique 20, cependant que l'autre, 25, de ces flancs, ne s'étend radialement qu'au-delà de ladite extrémité libre 31.

Pour le reste, les dispositions sont du type de celles décrites précédemment.

En particulier, et comme précédemment, l'angle V du dièdre que forment avec la rondelle élastique 20 les pattes 21 de celle-ci reste avantageusement sensiblement le même pour l'une et l'autre des configurations de cette rondelle élastique 20.

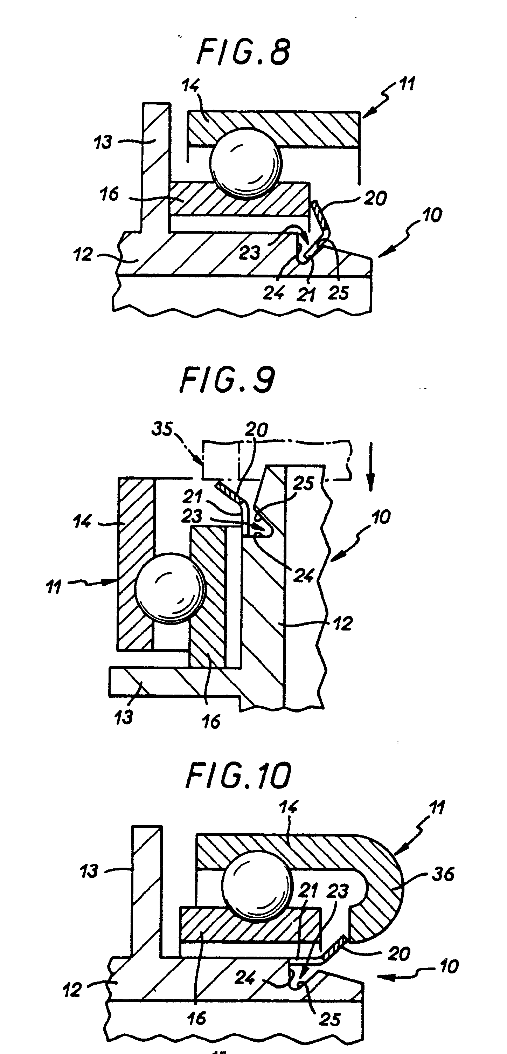

Dans la forme de réalisation représentée sur les figures 8 et 9, la gorge 23 que présente l'élément de manoeuvre 10 affecte à nouveau la surface externe du manchon 12 de celui-ci, mais elle s'étend, non plus à proximité de son flasque 13, mais, au contraire à proximité de l'extrémité libre de ce manchon opposée à celui, du côté de l'élément d'attaque 11, et la rondelle élastique 20 porte sur cet élément d'attaque 11 du côté de celui-ci opposé à ce flasque 13.

Tel que représenté, c'est la bague intérieure 16 du roulement à billes constituant l'élément d'attaque 11 qui prend appui sur le flasque 13 de l'élément de manoeuvre 10, et c'est donc par la bague extérieure 19 de ce roulement à billes, dûment prolongée et/ou conformée à cet effet, que cet élément d'attaque 11 est destiné à agir sur le dispositif débrayeur d'un embrayage.

Mais, comme précédemment, il va de soi qu'une disposition inverse peut être adoptée.

Quoi qu'il en soit, et comme précédemment, le flanc 24 de la gorge 23, qui est celui axialement le plus proche du flasque 13, et qui est destiné à former une butée pour les pattes 21 de la rondelle élastique 20 pour la configuration d'attente de celle-ci, est tourné axialement vers l'élément d'attaque 11, dans la mesure où, par rapport au flasque 13, il est, comme précédemment, tourné axialement dans le sens suivant lequel s'étend cet élément d'attaque 11.

Comme précédememnt, il s'agit d'un flanc droit.

Conjointement, le flanc 25 de la gorge 23, qui est celui axialement le plus éloigné du flasque 13, et qui est adapté à fournir un appui aux pattes 21 de la rondelle élastique 20 pour la configuration de service de celle-ci, est tourné axialement en sens opposé au précédent, et donc, comme précédemment, en sens opposé à l'élément d'attaque 11.

Dans la forme de réalisation représenteé, il s'agit d'un flanc incliné sur l'axe de l'ensemble, les pattes 21 de la rondelle élastique 20 s'étendant de manière rectiligne dans cette forme de réalisation, comme dans les formes de réalisation décrites en référence aux figures 1 à 4 et 7, en faisant un dièdre avec cette rondelle élastique 20.

Dans la forme de réalisation représentée, la bague intérieure 16 du roulement à billes constituant l'élément d'attaque 11 est globalement cylindrique, et c'est donc très simplement sur sa tranche opposée au flasque 13 de l'élément de manoeuvre 10 que porte la rondelle élastique 20.

Dans la forme de réalisation représentée, la bague extérieure 14 de ce roulement à billes est elle aussi globalement cylindrique.

Ainsi qu'on le notera, la forme de réalisation ainsi constituée, est de fabrication avantageusement très simple.

Pour son montage, il est possible, par exemple, et tel que représenté à la figure 9, de disposer verticalement l'élément de manoeuvre 10, d'engager axialement, sur cet élément de manoeuvre 10, d'abord l'élément d'attaque 11, jusqu'à butée de celui-ci sur son flasque 13,puis la rondelle élastique 20, alors indépendante du roulement à billes constituant cet élément d'attaque 11, jusqu'à butée des pattes 21 de celle-ci sur le flanc droit 24 de la gorge 23 de son manchon 12.

Il suffit, ensuite, à l'aide par exemple d'un outil en forme de douille 35, tel que schématisé en traits interrompus sur la figure 9, de provoquer le basculement brusque de la rondelle élastique 20.

Au terme de ce basculement, la rondelle élastique 20 s'applique à la tranche concernée de la bague intérieure 16 du roulement à billes constituant l'élément d'attaque 11, cependant que, comme précédemment, ses pattes 21 viennent porter sur le flanc incliné 25 de la gorge 23 de l'élément de manoeuvre 10.

Suivant la variante de réalisation représentée sur la figure 10, la bague extérieure 14 du roulement à billes constituant l'élément d'attaque 11 est plus ou moins profilée à celle de ses extrémités par laquelle elle est destinée à agir sur le dispositif débrayeur d'un embrayage.

Il peut avantageusement être tiré profit de la partie 36 ainsi recourbée en forme de crosse de cette bague extérieure 14 pour assurer le basculement brusque de la rondelle élastique 20 lors du montage de l'ensemble.

Dans un tel cas, cette rondelle élastique 20 équipe par avance le roulement à billes correspondant, comme dans les formes de réalisation des figures 1 à 7.

Ainsi qu'on le notera, dans toutes les formes de réalisation décrites et représentées, la concavité du dièdre que forment avec la rondelle élastique 20 les pattes 21 de celle-ci est tournée du même côté de la rondelle élastique 20 que celui par lequel, en configuration de service, cette rondelle élastique 20 porte axialement sur l'élément d'attaque 11.

En outre, dans tous les cas, les pattes 21 de la rondelle élastique 20 portent avantageusement par l'une de leurs faces, et non par leur extrémité, contre l'élément de manoeuvre 10 sur lequel elles prennent appui.

Bien entendu, la présente invention ne se limite cependant pas aux formes de réalisation décrites et représentées, mais englobe toute variante d'exécution et/ou de combinaison de leurs divers éléments.

En particulier, la gorge que présente suivant l'invention l'élément de manoeuvre ne s'étend pas nécessairement de manière circulairement continue.

Au contraire, elle peut, en variante, ne s'étendre circulairement que de manière discontinue, des moyens d'indexation étant alors prévus entre l'élément de manoeuvre et la rondelle élastique pour que les pattes de celle-ci se présentent correctement au droit des tronçons correspondants d'une telle gorge.

Par ailleurs, sur sa périphérie opposée à celle suivant laquelle elle présente des pattes, la rondelle élastique peut être plus ou moins crénelée, voire même présenter, également, réparties circulairement, des pattes.

Enfin, dans les formes de réalisation représentées sur les figures 1 à 7, cette rondelle élastique n'équipe pas nécessairement par avance l'élément d'attaque, notamment lorsque, un espace suffisant existant annulairement entre le manchon de l'élément de manoeuvre et la bague intérieure du roulement à billes constituant cet élément d'attaque, il est possible, à l'aide d'un outil, d'y pousser axialement cette rondelle élastique, alors même que, déjà engagé sur ledit élément de manoeuvre, ledit élément d'attaque est déjà en butée contre le flasque de ce dernier.

## Revendications

1. Butée de débrayage, notamment pour véhicule automobile, du genre comportant, globalement, d'une part, un élément de manoeuvre (10), qui est destiné à être soumis à l'action d'un organe de commande, par exemple une fourchette de débrayage, et, d'autre part, un élément d'attaque (11), qui, soit directement, soit indirectement, est en appui axial contre l'élément de manoeuvre (10), et qui, sous l'action de celui-ci, est destiné à agir sur le dispositif débrayeur d'un embrayage, avec, pour l'appui axial dudit élément d'attaque (11) sur ledit élément de manoeuvre (10) aussi bien que pour son maintien axial vis-à-vis de celui-ci, une rondelle élastique à action axiale (20), du type rondelle Belleville, qui, par retournement, est apte à prendre de manière stable l'une ou l'autre de deux configurations concave et convexe distinctes, l'une d'attente, l'autre de service, et qui, destinée à porter, axialement, en configuration de service, par l'une de ses périphéries, sur l'élément d'attaque (11), présente, le long de son autre périphérie, au moins une patte (21) par laquelle elle est adaptée à prendre appui sur l'élément de manoeuvre (10), et qui, prise dans son ensemble, fait globalement, un dièdre avec elle, l'élément de manoeuvre (10) présentant circonférentiellement, pour coopération avec la ou les pattes (21) que présente la rondelle élastique (20), une gorge (23) dont l'un (25) des flancs est adapté à former une butée pour la ou lesdites pattes (21) pour la configuration de service de la rondelle élastique (20), caractérisée en ce que l'autre (24) des flancs de ladite gorge (23) est adapté à former une butée à la ou lesdites pattes (21) pour la configuration d'attente de la rondelle élastique (20), en sorte que l'angle (V) du dièdre que forme(nt) la ou lesdites pattes (21) avec ladite rondelle élastique (20) peut avantageusement rester sensiblement le même pour l'une et l'autre desdites configurations.

2. Butée de débrayage suivant la revendication 1, caractérisée en ce que le flanc de la gorge (23) adapté à former une butée pour la ou les pattes (21) de la rondelle élastique (20) pour la configuration d'attente de celle-ci en est le flanc (24) axialement tourné vers l'élément d'attaque (11) et le flanc adapté à fournir un appui à la ou lesdites pattes (21) pour la configuration de service de cette rondelle élastique (20) en est le flanc (25) axialement tourné en sens opposé à cet élément d'attaque (11).

3. Butée de débrayage suivant l'une quelconque des revendications 1, 2, caractérisée en ce que la concavité du dièdre que font avec la rondelle élastique (20) la ou les pattes (21) dont est munie celle-ci est tournée du même côté de cette rondelle élastique (20) que celui par lequel, en configuration de service, cette rondelle élastique (20) porte axialement sur l'élément d'attaque (11).

4. Butée de débrayage suivant l'une quelconque des revendications 1 à 3, caractérisée en ce que, pour la configuration d'attente de la rondelle élastique (20), l'extrémité (31) de la ou des pattes (21) de celle-ci s'étend sur une circonférence dont le rayon (R3) est compris entre ceux (R1, R2) des circonférences suivant lesquelles s'étendent chacun respectivement les bords d'extrémité des flancs (24, 25) de la gorge (23) de l'élément de manoeuvre (10).

5. Butée de débrayage suivant la revendication 4, caractérisée en ce que le rayon (R3) de la circonférence sur laquelle s'étend l'extrémité (31) de la ou des pattes (21) de la rondelle élastique (20) est a peu près égal au rayon (R2) de la circonférence suivant laquelle s'étend le bord d'extrémité du flanc (25) de la gorge (23) de l'élément de manoeuvre (10) axialement tourné en sens opposé à l'élément d'attaque (11).

6. Butée de débrayage suivant l'une quelconque des revendications 1 à 5, caractérisée en ce que, la rondelle élastique (20) étant destinée à porter sur l'élément d'attaque (11) par sa périphérie externe, elle présente au moins une patte (21) à sa périphérie interne, et, pour la configuration d'attente de ladite rondelle élastique (20), celui (24) des flancs de la gorge (23) de l'élément de manoeuvre (10) qui est tourné axialement vers l'élément d'attaque (11) s'étend radialement au-delà de l'extrémité (31) de ladite patte (21), cependant que l'autre (25) desdits flancs ne s'étend radialement qu'en-deçà de ladite extrémité (31).

7. Butée de débrayage suivant l'une quelconque des revendications 1 à 6, caractérisée en ce que, l'élément de manoeuvre (10) comportant, transversalement, un flasque (13), et, axialement, un manchon (12), tandis que l'élément d'attaque (11) comporte, lui-même, transversalement, pour appui axial sur ledit flasque (13) dudit élément de manoeuvre (10), un bord tombé (15), et la rondelle élastique (20) étant destinée à porter, axialement, par une périphérie, en configuration de service, sur ledit bord tombé (15) dudit élément d'attaque (11), la gorge (23) de l'élément de manoeuvre (10) affecte la surface externe du manchon (12) de celui-ci et elle s'étend sensiblement au droit, radialement, du bord tombé (15) de l'élément d'attaque (11).

8. Butée de débrayage suivant l'une quelconque des revendications 1 à 5, caractérisée en ce que, la rondelle élastique (20) étant destinée à porter sur l'élément d'attaque (11) par sa périphérie interne, elle présente au moins une patte (21) à sa périphérie externe, la gorge (23) que présente l'élément de manoeuvre (10) affecte la surface interne d'une couronne (35) que le flasque (13) de cet élément de manoeuvre (10) présente axialement en saillie à sa périphérie externe, et, pour la configuration d'attente de ladite rondelle élastique (20), celui (24) des flancs de la gorge (23) de l'élément de manoeuvre (10) qui est tourné axialement vers l'élément d'attaque (11) s'étend radialement en-deçà de l'extrémité (31) de ladite patte (21), cependant que l'autre (25) desdits flancs ne s'étend radialement qu'au-delà de ladite extrémité (31).

9. Butée de débrayage suivant l'une quelconque des revendications 1 à 8, caractérisée en ce que la ou les pattes (21) de la rondelle élastique (20) sont sensiblement rectilignes, et, l'élément de manoeuvre (10) comportant, transversalement, pour l'appui axial de l'élément d'attaque (11), un flasque (13), le flanc (25) de la gorge (23) dudit élément de manoeuvre (10) destiné à fournir un appui à la ou les pattes (21) de ladite rondelle élastique (20) pour la configuration de service de celle-ci est incliné sur l'axe de l'ensemble, ledit flanc (25) s'éloignant dudit flasque (13) de cet élément de manoeuvre (10) au fur et à mesure qu'il s'écarte de l'autre flanc (24) de ladite gorge (23).

10. Butée de débrayage suivant l'une quelconque des revendications 1 à 8, caractérisée en ce que la ou les pattes (21) de la rondelle élastique (20) présentent au moins un coude (29), et, pour la configuration d'attente de la rondelle élastique (20), elles portent, par leur coude (29), sur une portée cylindrique (28) de l'élément d'attaque (11).

11. Butée de débrayage suivant la revendication 10, caractérisée en ce que la ou les pattes (21) de la rondelle élastique (20) ont globalement une configuration en S, en présentant successivement, à compter de ladite rondelle élastique (20), deux coudes (27, 29) de concavités opposées l'un par rapport à l'autre, et c'est par le deuxième (29) de ces coudes, celui le plus éloigné de la rondelle élastique (20), que, en configuration d'attente, la ou lesdites pattes (21) sont aptes à porter sur une portée cylindrique (28) de l'élément d'attaque (11).

12. Butée de débrayage suivant la revendication 1, caractérisée en ce que la butée que le flanc (25) de la gorge (23) de l'élément de manoeuvre (10) fournit à la ou aux pattes (21) de la rondelle élastique (20) pour la configuration de service de celle-ci est une butée d'appui, la ou lesdites pattes (21) portant alors à plat sur ledit flanc (25).

## Ansprüche

1. Kupplungsausrücklager, insbesondere für ein Kraftfahrzeug, von der Art, die im wesentlichen einerseits ein Bedienungselement (10) enthält, welches zur Betätigung durch ein Bedienungsorgan, z.B. eine Ausrückgabel, bestimmt ist, und andererseits ein Treibelement (11), welches entweder direkt oder indirekt in Längsrichtung auf dem Bedienungselement (10) aufliegt und welches unter Einwirkung desselben auf die Ausrückvorrichtung einer Kupplung einwirken soll, wobei für die axiale Auflage des genannten Treibelements (11) auf dem genannten Bedienungselement (10) sowie für die axiale Befestigung im Verhältnis dazu eine axial angreifende Federscheibe (20) nach Art einer Tellerfeder vorgesehen ist, die durch Rückfederung in der Lage ist, auf stabile Weise die eine oder andere von zwei verschiedenen Konfigurationen, konkav bzw. konvex, anzunehmen, von denen eine die Warte- und die andere die Betriebskonfiguration darstellt, und die dazu bestimmt ist, in Betriebskonfiguration axial mit einem der Umfangsränder auf dem Treibelement (11) aufzuliegen, und die entlang des anderen Umfangsrandes wenigstens eine Lasche (21) aufweist, mit der sie auf dem Bedienungselement (10) zur Auflage gebracht werden kann, und die damit insgesamt ein Zweiflach bildet, wobei das Bedienungselement (10) für das Zusammenwirken mit der Lasche bzw. den Laschen (21) der Federscheibe (20) am Kreisumfang eine Rille (23) aufweist, deren eine Flanke geeignet ist, einen Anschlag für die Lasche bzw. Laschen (21) für die Betriebskonfiguration der Federscheibe (20) zu bilden, **dadurch gekennzeichnet, daß** die andere (24) der Flanken der genannten Rille (23) geeignet ist, einen Anschlag für die genannte(n) Lasche(n) (21) für die Wartekonfiguration der Federscheibe (20) zu bilden, so daß der Winkel (V) des Zweiflachs, der durch die genannte(n) Lasche(n) (21) mit der genannten Federscheibe (20) gebildet wird, für beide genannten Konfigurationen im wesentlichen derselbe bleiben kann.

2. Kupplungsausrücklager nach Anspruch 1, **dadurch gekennzeichnet, daß** die Flanke der Rille (23), die geeignet ist, einen Anschlag für die Lasche(n) (21) der Federscheibe (20) für die Wartekonfiguration derselben zu bilden, die Flanke (24) darstellt, die axial dem Treibelement (11) zugewandt ist, und daß die Flanke, die als Auflage für die genannte(n) Lasche(n) (21) für die Betriebskonfiguration dieser Federscheibe (20) dienen soll, diejenige Flanke (25) bildet, die axial diesem Treibelement (11) entgegengesetzt ist.

3. Kupplungsausrücklager nach einem der Ansprüche 1, 2, **dadurch gekennzeichnet, daß** die Konkavität des Zweiflachs, welches die Lasche(n) (21) mit der Federscheibe (20) bildet (bilden), mit denen diese versehen ist, der gleichen Seite dieser Federscheibe (20) zugewandt ist wie derjenigen, mit der diese Federscheibe (20) in Betriebskonfiguration axial auf dem Treibelement (11) aufliegt.

4. Kupplungsausrücklager nach einem der Ansprüche 1 bis 3, **dadurch gekennzeichnet**, daß sich das Ende (31) der Lasche(n) (21) der Federscheibe, während sich die Federscheibe (20) in Wartekonfiguration befindet, über einen Kreisumfang erstreckt, dessen Halbmesser (R3) zwischen denjenigen (R1, R2) der Kreisumfänge liegt, an denen entlang sich die Abschlußkanten der Flanken (24, 25) der Rille (23) des Bedienungselements (10) jeweils erstrecken.

5. Kupplungsausrücklager nach Anspruch 4, **dadurch gekennzeichnet**, daß der Halbmesser (R3) des Kreisumfangs, an dem entlang sich das Ende (31) der Lasche(n) (21) der Federscheibe (20) erstreckt, fast gleich dem Halbmesser (R2) des Kreisumfangs ist, an dem entlang sich der Abschlußrand der Flanke (25) der Rille (23) des Bedienungselements (10) erstreckt, welches dem Treibelement (11) entgegengesetzt ist.

6. Kupplungsausrücklager nach einem der Ansprüche 1 bis 5, **dadurch gekennzeichnet**, daß die Federscheibe (20), da sie dazu bestimmt ist, mit der Außenperipherie auf dem Treibelement (11) aufzuliegen, an der Innenperipherie wenigstens eine Lasche (21) aufweist und daß sich für die Wartekonfiguration der genannten Federscheibe (20) diejenige (24) der Flanken der Rille (23) des Bedienungselements (10), die axial dem Treibelement (11) zugewandt ist, radial über das Ende (31) der genannten Lasche (21) hinaus erstreckt, während die andere (25) der genannten Flanken sich radial nur diesseits des genannten Endes (31) erstreckt.

7. Kupplungsausrücklager nach einem der Ansprüche 1 bis 6, **dadurch gekennzeichnet**, daß das Bedienungselement (10) in Querrichtung einen Flansch (13) und in Längsrichtung eine Muffe (12) aufweist, während das Treibelement (11) seinerseits in Querrichtung für die axiale Auflage des genannten Bedienungselements (10) auf dem genannten Flansch (13) eine abwärtsgerichtete Kante (15) besitzt und die Federscheibe (20) dazu bestimmt ist, bei Betriebskonfiguration mit der Peripherie in Längsrichtung auf der genannten abwärtsgerichteten Kante (15) des genannten Treibelements (11) aufzuliegen, wobei die Rille (23) des Bedienungselements (10) die Außenfläche der Muffe (12) desselben berührt und sich im wesentlichen radial in Höhe der abwärtsgerichteten Kante (15) des Treibelements (11) erstreckt.

8. Kupplungsausrücklager nach einem der Ansprüche 1 bis 5, **dadurch gekennzeichnet**, daß die Federscheibe (20), die dazu bestimmt ist, mit der Innenperipherie auf dem Treibelement (11) aufzuliegen, an der Außenperipherie wenigstens eine Lasche (21) aufweist, daß die Rille (23) am Bedienungselement (10) die Innenfläche eines Kranzes (35) berührt, den der Flansch (13) dieses Bedienungselements (10) axial an der Außenperipherie vorspringend aufweist, und daß sich in Wartekonfiguration der genannten Federscheibe (20) diejenige (24) der Flanken der Rille (23) des Bedienungselements (10), die axial dem Treibelement (11) zugewandt ist, radial diesseits des Endes (31) der genannten Lasche (21) erstreckt, während sich die andere (25) der genannten Flanken radial nur über das genannte Ende (31) hinaus erstreckt.

9. Kupplungsausrücklager nach einem der Ansprüche 1 bis 8, **dadurch gekennzeichnet**, daß die Lasche(n) (21) der Federscheibe (20) im wesentlichen geradlinig verläuft (verlaufen) und daß das Bedienungselement (10) in Querrichtung für die axiale Auflage des Treibelements (11) einen Flansch (13) aufweist, während die Flanke (25) der Rille (23) des genannten Bedienungselements (10), die als Auflage für die Lasche(n) (21) der genannten Federscheibe (20) bei Betriebskonfiguration derselben bestimmt ist, gegenüber der Hauptachse geneigt ist und sich die genannte Flanke (25) von dem genannten Flansch (13) dieses Bedienungselements (10) in dem Maße entfernt, wie der Abstand zu der anderen Flanke (24) der genannten Rille (23) zunimmt.

10. Kupplungsausrücklager nach einem der Ansprüche 1 bis 8, **dadurch gekennzeichnet**, daß die Lasche(n) (21) der Federscheibe (20) wenigstens einen Bogen (29) aufweist (aufweisen) und daß sie in Betriebskonfiguration der Federscheibe (20) mit dem Bogen (29) auf einer zylindrischen Fläche (28) des Treibelements (11) aufliegen.

11. Kupplungsausrücklager nach Anspruch 10, **dadurch gekennzeichnet**, daß die Lasche(n) (21) der Federscheibe (20) eine im wesentlichen S-förmige Konfiguration hat (haben) und, ausgehend von der genannten Federscheibe (20), nacheinander zwei Bögen (27, 29) mit einander gegenüberliegenden Hohlflächen aufweist (aufweisen), und daß die Lasche(n) (21) in Wartekonfiguration mit dem zweiten (29) dieser Bögen, also dem am weitesten von der Federscheibe (20) entfernten Bogen, auf einer zylindrischen Fläche (28) des Treibelements (11) aufliegen kann (können).

12. Kupplungsausrücklager nach Anspruch 1, **dadurch gekennzeichnet**, daß der Anschlag, den die Flanke (25) der Rille (23) des Bedienungselements (10) für die Lasche(n) (21) der Federscheibe (20) in Betriebskonfiguration derselben bildet, einen Auflageanschlag darstellt, so daß die genannte(n) Lasche(n) (21) dann flach auf der genannten Flanke (25) aufliegt (aufliegen).

## Claims

1. A clutch release bearing, in particular for an automotive vehicle, of the kind generally comprising, firstly a manoeuvring member (10), which is adapted to be subjected to the action of a control member, for example a clutch release yoke, and secondly a drive member (11) which is in axial engagement, directly or indirectly, against the manoeuvring member (10), and which is adapted to act under the action of the latter on the clutch release mechanism of a clutch, with an axially acting resilient ring (20), of the Belleville ring type, for the axial engagement of the said drive member (11) on the said manoeuvring member (10) and also for its axial retention in relation to the latter, the said Belleville ring being such as to adopt, through rotational movement, one or other of two distinct stable configurations, one being concave and one being convex, one said configuration being a stand-by configuration and the other being a working configuration, the Belleville ring being further adapted so as in the working configuration to bear axially on the drive member (11) through one of its peripheries, and having on its other periphery at least one lug (21) by means of which it is adapted to come into engagement on the manoeuvring member (10), with the Belleville ring, considered as a whole, assuming a generally dihedral relationship with the latter, the manoeuvring member (10) having a circumferential groove (23) for cooperation with the lug or lugs (21) of the resilient ring (20), and one of the sides (25) of the groove being adapted to constitute an abutment surface for the said lug or lugs (21) in the working configuration of the resilient ring (20), characterised in that the other side (24) of the said groove (23) is adapted to constitute an abutment surface for the said lug or lugs (21) in the stand-by configuration of the resilient ring (20), such that the angle (V) of the dihedral defined by the said lug or lugs (21) with the said resilient ring (20) can beneficially remain substantially the same in both of the said configurations.

2. A clutch release bearing according to Claim 1, characterised in that the side of the groove (23) which is adapted to constitute an abutment surface for the lug or lugs (21) of the resilient ring (20) in the stand-by configuration of the latter is that one (24) of its sides which faces axially towards the drive member (11), while the side which is adapted to provide engagement with the said lug or lugs (21) in the working configuration of the said resilient ring (20) is that one (25) of its sides which faces axially away from the said drive member (11).

3. A clutch release bearing according to either one of Claims 1 and 2, characterised in that the concave side of the dihedral defined with the resilient ring (20) by the tab or tabs (21) with which the latter is provided is on the same side of the said resilient ring (20) as that by which the said resilient ring (20) bears axially on the drive member (11) in the working configuration.

4. A clutch release bearing according to any one of Claims 1 to 3, characterised in that, in the stand-by configuration of the resilient ring (20), the end (31) of the tab or tabs (21) of the latter extends over a circumference the radius (R3) of which lies between the radii (R1, R2) of the circumferences over which each terminal edge of the sides (24, 25) of the groove (23) of the manoeuvring member (10) respectively extends.

5. A clutch release bearing according to Claim 4, characterised in that the radius (R3) of the circumference over which the terminal edge (31) of the tab or tabs (21) of the resilient ring (20) extends is approximately equal to the radius (R2) of the circumference over which the terminal edge of the side (25) of the groove (23) of the manoeuvring element (10) which is axially directed away from the drive member (11) extends.

6. A clutch release bearing according to any one of Claims 1 to 5, characterised in that, the resilient ring (20) being adapted to bear on the drive member (11) through its outer periphery, it has at least one tab (21) on its inner periphery, and in the stand-by configuration of the said resilient ring (20), that one (24) of the sides of the groove (23) of the manoeuvring element (10) that faces axially towards the drive member (11) extends radially beyond the end (31) of the said tab (21), while the other one (25) of the said sides extends radially only on the proximal side of the said end (31).

7. A clutch release bearing according to any one of Claims 1 to 6, characterised in that, the manoeuvring member (10) including a transverse flange (13) and an axial sleeve portion (12), the drive member (11) having a transverse upstanding edge (15) for axial engagement on the said flange (13) of the said manoeuvring member (10), and the resilient ring (20) being adapted to bear axially through one periphery on the said upstanding edge (15) of the said drive member (11) in the working configuration, the groove (23) of the manoeuvring member (10) is formed on the outer surface of the sleeve portion (12) of the latter and extends in substantial radial alignment with the upstanding edge (15) of the drive member (11).

8. A clutch release member according to any one of Claims 1 to 5, characterised in that, the resilient ring (20) being adapted to bear on the drive member (11) through its inner periphery, it has at least one lug (21) on its outer periphery, the groove (23) which is provided on the manoeuvring member (10) is on the inner surface of a crown (35) extending axially on the flange (13) of the said member and projecting from its outer periphery, and, in the stand-by configuration of the said resilient ring (20), that one (24) of the sides of the groove (23) of the manoeuvring member (10) that faces axially towards the drive member (11) extends radially beyond the end (31) of the said lug (21), while the other one (25) of the said sides only extends radially from the said end (31).

9. A clutch release bearing according to any one of Claims 1 to 8, characterised in that the lug or lugs (21) of the resilient ring (20) are substantially rectilinear, and, the manoeuvring member (10) comprising a transverse flange (13) for axial engagement with the drive member (11), that one (25) of the sides of the groove (23) of the said manoeuvring member (10) which is adapted to provide an engagement with the lug or lugs (21) of the said resilient ring (20) in the working configuration of the latter is inclined to the axis of the assembly, with the said side (25) diverging with respect to the said flange (13) of the said manoeuvring member (10) to the same extent that it is spaced from the other side (24) of the said groove (23).

10. A clutch release bearing according to any one of Claims 1 to 8, characterised in that the lug or lugs (21) of the resilient ring (20) include at least one elbow (29), and in the stand-by configuration of the resilient ring (20), they bear through their elbow (29) on a cylindrical surface (28) of the drive member (11).

11. A clutch release bearing according to Claim 10, characterised in that the lug or lugs (21) of the resilient ring (20) are of generally S-shaped configuration, having in succession, reading from the said resilient ring (20), two elbows (27, 29) which are concave in opposite directions in relation to each other, and it is by means of the second one (29) of the said elbows, namely that which is spaced furthest away from the resilient ring (20), that in the stand-by configuration the said lug or lugs (21) are adapted to bear on a cylindrical surface (28) of the drive member (11).

12. A clutch release bearing according to Claim 1, characterised in that the abutment surface which the side (25) ot the groove (23) of the manoeuvring member (10) presents to the lug or lugs (21) of the resilient ring (20) in the working configuration of the latter is a stop surface, with the said lug or lugs (21) then lying flat on the said side (25).

# FIG.1

# FIG.2

# FIG.3

# FIG.4A

# FIG.4B

FIG.5

FIG.6

FIG.7

## FIG.8

## FIG.9

## FIG.10